(19) Europäisches Patentamt
European Patent Office
Office européen des brevets

(11) **EP 4 502 875 A1**

(12) **EUROPEAN PATENT APPLICATION**
published in accordance with Art. 153(4) EPC

(43) Date of publication:
**05.02.2025 Bulletin 2025/06**

(21) Application number: **23779900.2**

(22) Date of filing: **22.03.2023**

(51) International Patent Classification (IPC):
***G06N 10/70*** (2022.01)

(52) Cooperative Patent Classification (CPC):
**G06N 10/70**

(86) International application number:
**PCT/JP2023/011095**

(87) International publication number:
**WO 2023/189886 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022 JP 2022061245**

(71) Applicant: **Sony Group Corporation
Tokyo 108-0075 (JP)**

(72) Inventors:
• **TEZUKA, Hiroyuki**
**Tokyo 108-0075 (JP)**
• **TANAKA, Yu**
**Tokyo 108-0075 (JP)**
• **UENO, Hiroshi**
**Tokyo 108-0075 (JP)**
• **TETSUKAWA, Hiroki**
**Tokyo 108-0075 (JP)**

(74) Representative: **D Young & Co LLP
3 Noble Street
London EC2V 7BQ (GB)**

(54) **INFORMATION PROCESSING DEVICE**

(57) To provide an information processing apparatus in which NISQ is combined with FTQC performing computation while correcting an error. The information processing apparatus (1) includes a first quantum computation unit (20), a second quantum computation unit (30), and a control unit (10). The first quantum computation unit (20) includes a qubit and performs quantum computation. The second quantum computation unit (30) includes qubits and performs quantum computation with error correction. The control unit (10) causes the first quantum computation unit (20) to perform computation processing, and performs control to transfer the computation processing to the second quantum computation unit (30) on the basis of an error amount in the computation processing in the first quantum computation unit (20).

FIG.2

EP 4 502 875 A1

**Description**

Field

The present disclosure relates to an information processing apparatus.

Background

Quantum computers have attracted attention as a system capable of performing complex computation processing at high speed. Of the quantum computers, noisy intermediate scale quantum (NISQ), which is an intermediate-scale quantum computer, is widely used in applications such as examination of a quantum computer algorithm. This NISQ has a problem that noise is generated in a result of computation and errors are accumulated. Therefore, a system has been proposed that levels noise by combining the NISQ and a classical computer (e.g., see Patent Literature 1).

Citation List

Patent Literature

Patent Literature 1: US 2021/272002 A

Summary

Technical Problem

However, the conventional art described above has room for further improvement in error correction.
Therefore, the present disclosure proposes an information processing apparatus in which NISQ is combined with a quantum computation unit performing computation while correcting an error.

Solution to Problem

The information processing apparatus according to the present disclosure includes a first quantum computation unit, a second quantum computation unit, and a control unit. The first quantum computation unit includes a qubit and performs quantum computation. The second quantum computation unit includes qubits and performs quantum computation with error correction. The control unit causes the first quantum computation unit to perform computation processing, and performs control to transfer the computation processing to the second quantum computation unit on the basis of an error amount in the computation processing in the first quantum computation unit.

Brief Description of Drawings

FIG. 1 is a table illustrating features of FTQC and NISQ.
FIG. 2 is a diagram illustrating an example of a schematic configuration of an information processing apparatus according to a first embodiment of the present disclosure.
FIG. 3 is a diagram illustrating an exemplary configuration of a conventional information processing apparatus.
FIG. 4 is a diagram illustrating an exemplary process of conventional information processing.
FIG. 5 is a diagram illustrating an exemplary configuration of the information processing apparatus according to the first embodiment of the present disclosure.
FIG. 6 is a flowchart illustrating an exemplary process procedure of information processing according to the first embodiment of the present disclosure.
FIG. 7A is a diagram illustrating an example of a circuit for transfer of a result of computation according to the first embodiment of the present disclosure.
FIG. 7B is a diagram illustrating an example of error correction codes represented by stabilizer codes.
FIG. 8 is a flowchart illustrating an exemplary process procedure of information processing according to a second embodiment of the present disclosure.
FIG. 9 is a diagram illustrating an example of a circuit for transfer of a result of computation according to the second embodiment of the present disclosure.
FIG. 10 is a diagram illustrating an example of a schematic configuration of an information processing apparatus according to a third embodiment of the present disclosure.

FIG. 11 is a flowchart illustrating an exemplary process procedure of information processing according to the third embodiment of the present disclosure.

FIG. 12 is a block diagram illustrating an exemplary configuration of an information processing apparatus according to a modification of an embodiment of the present disclosure.

Description of Embodiments

Embodiments of the present disclosure will be described in detail below with reference to the drawings. The description will be given in the following order. Note that in the following embodiments, the same portions are denoted by the same reference numerals, and repetitive description thereof will be omitted.

1. Background
2. First Embodiment
3. Second Embodiment
4. Third Embodiment
5. Modifications

(1. Background)

The above-described NISQ has a finite length in time during which quantumness is maintained, due to the influence of noise generated every time a quantum operation is performed. Therefore, the NISQ has a problem that only a finite number of quantum operations can be performed. Against the NISQ, a fault tolerant quantum computer (FTQC) that performs quantum computation while correcting an error can perform any number of appropriate quantum computations. In order to achieve the FTQC, it is necessary to implement an error detection and correction code (ECC) using a large number of physical qubits. For example, when an error rate without ECC is 0.1%, 1000 physical qubits are required to make one logical qubit. Even when the ECC is implemented, a Clifford operation enables efficient processing. However, for performing a non-Clifford operation, which is a key to obtain quantum advantage, an operation called a T-gate is required. In order to cause this T-gate to act, it is necessary to generate a special quantum state called a magic state. In order to perform quantum computation in a state in which the ECC is implemented, a large number of the magic states are required. For example, it is estimated that 90% or more of qubits of the FTQC are spent to generate the magic state.

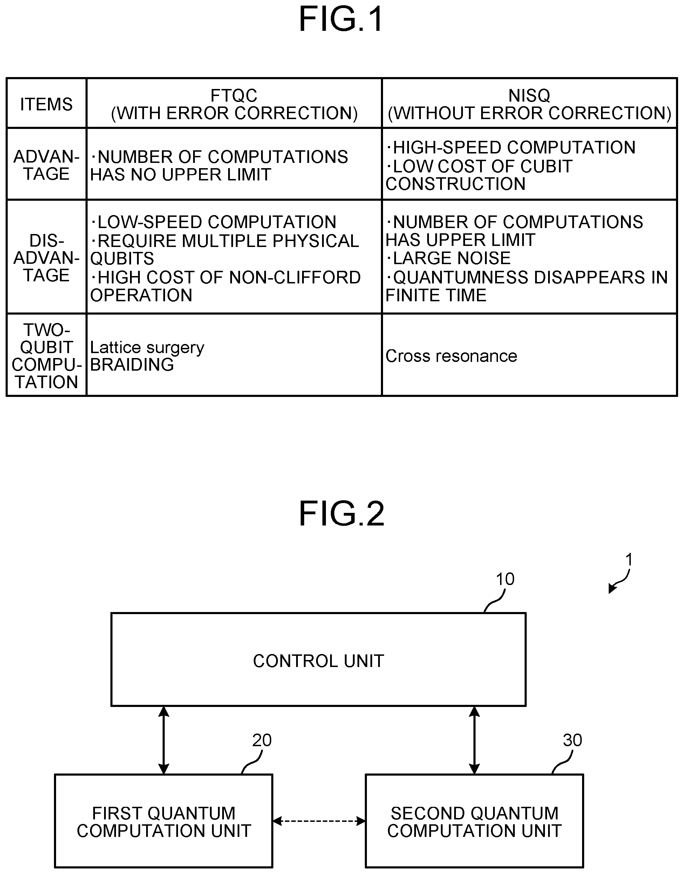

FIG. 1 is a table illustrating the features of the FTQC and the NISQ. The advantage of the FTQC is that repeated error correction makes it possible to store a quantum state for a long time while maintaining the quantumness. Therefore, the FTQC enables any number of computations. This configuration enables complicated operation. Furthermore, the NISQ has the advantage of performing a CNOT operation (Clifford operation) generating relatively large noise at low cost.

On the other hand, the disadvantage of the FTQC is that a large number of physical qubits are required to generate a logical qubit in which ECC is implemented. Therefore, the FTQC is very expensive. Furthermore, computation performed in a state where ECC is implemented requires a special gate (T-gate). In addition, ECC processing is required throughout the computation, thus having the disadvantages of increased processing time, increased power consumption, and the like. This is because it is necessary to read a plurality of qubits each time of ECC processing. This operation of reading qubits requires a time period that is several times that of gate operation.

Meanwhile, the NISQ does not require the ECC processing, and high-speed computation is enabled. In addition, one logical qubit represented by one physical qubit makes it possible for the NISQ to build a large-scale system using qubits the number of which is 1000 times that of the FTQC.

On the other hand, the disadvantages of the NISQ are that quantumness disappears in a finite time, that only a finite number of operations can be performed due to noise generated during quantum computation, and that computation is poor over a plurality of qubits.

Such FTQC and NISQ are used in combination to compensate for each other's disadvantages. The present invention has been devised for the purpose of using FTQC and NISQ to compensate for each other's shortcomings and provide the best computation performance.

(2. First Embodiment)

[Configuration of information processing apparatus]

FIG. 2 is a diagram illustrating an example of a schematic configuration of an information processing apparatus according to a first embodiment of the present disclosure. The drawing is a block diagram illustrating an example of a schematic configuration of the information processing apparatus 1. The information processing apparatus 1 includes a control unit 10, a first quantum computation unit 20, and a second quantum computation unit 30.

The first quantum computation unit 20 includes a qubit and performs quantum computation. The first quantum computation unit 20 is a computation unit that does not perform error correction in the quantum computation, and corresponds to the NISQ described above.

The second quantum computation unit 30 includes qubits and performs quantum computation with error correction. The second quantum computation unit 30 corresponds to the FTQC described above.

The first quantum computation unit 20 and the second quantum computation unit 30 in the drawing can also include a communication channel for interaction. A dotted arrow in the drawing represents this communication channel. The communication channel corresponds to, for example, a quantum channel via quantum entanglement.

The control unit 10 controls the first quantum computation unit 20 and the second quantum computation unit 30. The control unit 10 causes the first quantum computation unit 20 to perform computation processing, and performs control to transfer the computation processing to the second quantum computation unit 30 on the basis of an error amount in the computation processing in the first quantum computation unit 20.

Focusing on physical arrangement place, the first quantum computation unit 20 and the second quantum computation unit 30 can be arranged in different regions in the same chip (die), different chips, different packages, different housings, different systems, or the like. Furthermore, focusing on physical system for mounting, superconductors, ions, cold atoms, light, semiconductor, or the like can be applied to the first quantum computation unit 20 and the second quantum computation unit 30.

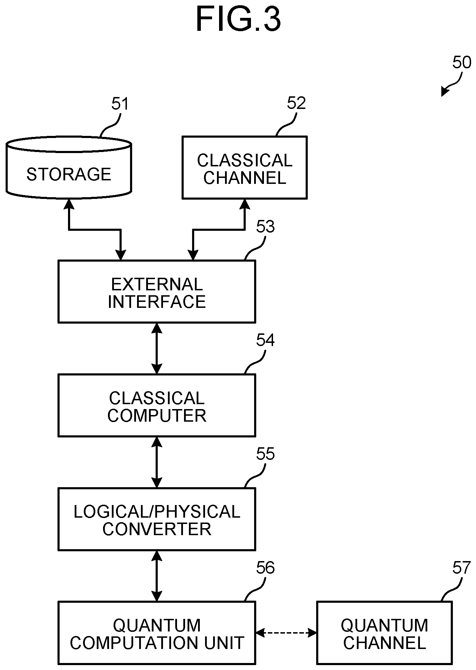

FIG. 3 is a diagram illustrating an exemplary configuration of a conventional information processing apparatus. The drawing is a block diagram illustrating an example of a schematic configuration of the information processing apparatus 50 described as a comparative example. The information processing apparatus 50 includes a storage 51, a classical channel 52, an external interface 53, a classical computer 54, a logical/physical converter 55, a quantum computation unit 56, and a quantum channel 57.

The classical computer 54 is a computer that includes a central processing unit (CPU) and the like, and is a processor that does not perform quantum computation. The external interface 53 interacts with the storage 51 and the classical channel 52. The storage 51 holds programs and data. The classical channel 52 is a communication channel such as LAN. The logical/physical converter 55 is an interface between the classical computer 54 and the quantum computation unit 56. The quantum computation unit 56 performs quantum computation. The classical computer 54 performs processing while communicating with the quantum computation unit 56 via the logical/physical converter 55.

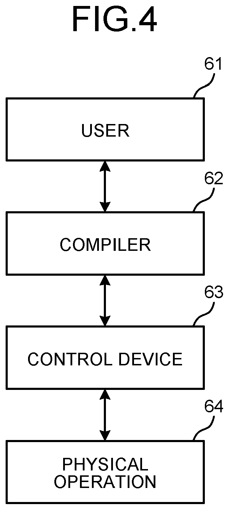

FIG. 4 is a diagram illustrating an exemplary process of conventional information processing. The drawing is a diagram of interactions between hierarchies in the information processing apparatus 50 of FIG. 3, according to information levels. A user 61 inputs an instruction in a relatively high-level programming language. This instruction is decomposed into low-level elements by a compiler 62 arranged in the classical computer 54. For a decomposition method of the processing, various methods can be considered depending on various restrictions, viewpoint, and evaluation index. The decomposed processing results in a command associated with a physical operation. On the basis of this command, a control device 63 causes the quantum computation unit 56 to perform a physical operation 64.

For example, in a superconducting quantum computer, a quantum state called a transmon is controlled by irradiation with microwave to perform computation. Mapping that represents whether a logical qubit is assigned to which physical qubit, the intensity, phase, irradiation time, and the like of the microwave for irradiation are optimized, in view of the characteristics and topology of a device to be used, processing to be executed, a priority index, and the like.

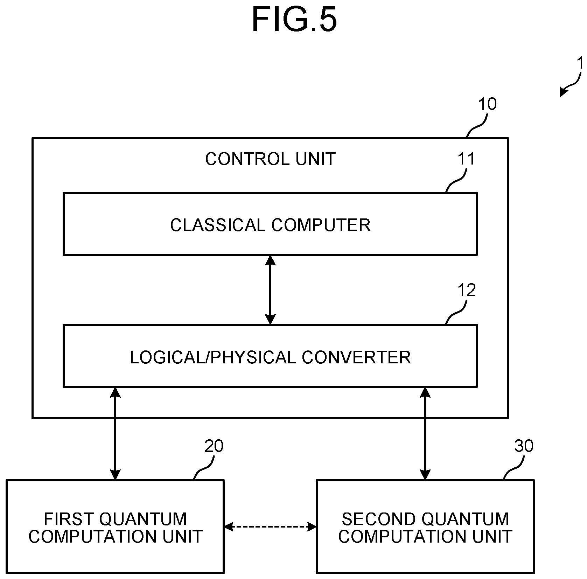

Unlike the information processing apparatuses illustrated in FIGS. 3 and 4, the information processing apparatus 1 of the present disclosure repeats compilation and command execution in the quantum computation units. The control unit 10 of FIG. 2 causes the first quantum computation unit 20 and the second quantum computation unit 30 of FIG. 2 to perform allocated computation processing and performs control to transfer computation processing from the first quantum computation unit 20 to the second quantum computation unit 30. Specifically, the control unit 10 performs compilation for the computation processing to generate a command, and causes the first quantum computation unit 20 to execute the command. Then, the control unit 10 interrupts the processing of the first quantum computation unit 20 according to a status of the computation processing. The control unit 10 performs recompilation for the rest of the computation processing to generate a command and performs control to transfer the rest of the computation processing to the second quantum computation unit 30. This configuration makes it possible for the information processing apparatus 1 to perform computation processing by combining the first quantum computation unit 20 that does not perform error correction and the second quantum computation unit 30 that performs error correction. The information processing apparatus 1 of the present disclosure will be described in detail with reference to FIG. 5.

Note that the control unit 10 can also allocate the computation processing in consideration of the status of the computation processing such as an error amount in the first quantum computation unit 20. In this configuration, the control unit 10 generates a command for each of the first quantum computation unit 20 and the second quantum computation unit 30 upon compilation. Then, the control unit 10 causes the first quantum computation unit 20 and the second quantum computation unit 30 to execute the generated commands sequentially. At this time, the control unit 10 performs control to transfer a result of the computation processing in the first quantum computation unit 20 to the second quantum computation unit 30 for execution of the rest of the computation processing.

FIG. 5 is a diagram illustrating an exemplary configuration of the information processing apparatus according to the first embodiment of the present disclosure. Similarly to FIG. 1, the drawing is a block diagram illustrating an exemplary configuration of the information processing apparatus 1. The information processing apparatus 1 of FIG. 5 is different from the information processing apparatus 1 of FIG. 1 in that the control unit 10 includes a classical computer 11 and a logical/physical converter 12.

The classical computer 11 in the drawing controls the compilation described above and switching between the first quantum computation unit 20 and the second quantum computation unit 30. The classical computer 11 causes the first quantum computation unit 20 to execute the command after compilation and to interrupt the processing in the first quantum computation unit 20 according to the status of the computation processing. Next, the classical computer 11 performs recompilation for the rest of the interrupted processing to generate the command and causes the second quantum computation unit 30 to execute the command to transfer the processing. In the transfer of the processing, the classical computer 11 further performs control to transfer a result of the computation in the first quantum computation unit 20 to the second quantum computation unit 30. The second quantum computation unit 30 performs error correction, and therefore, the classical computer 11 performs control to add an error correction code to the result of the computation.

Note that, similarly to the control unit 10 in FIG. 2, the classical computer 11 can also perform compilation for the computation processing allocated to the first quantum computation unit 20 and the second quantum computation unit 30, in consideration of the status of the computation processing such as the error amount in the first quantum computation unit 20. Thereafter, the classical computer 11 causes the first quantum computation unit 20 and the second quantum computation unit 30 to execute the generated commands sequentially. The classical computer 11 performs control to transfer the result of the computation processing in the first quantum computation unit 20 to the second quantum computation unit 30 to perform the rest of the computation processing.

As described above, the classical computer 11 transfers the processing to the second quantum computation unit 30 according to the status of the processing in the first quantum computation unit 20. For example, for the status of the processing in the first quantum computation unit 20 that causes the transfer of the processing can adopt the error amount in the computation processing by the first quantum computation unit 20. As described above, in the first quantum computation unit 20, errors are accumulated through the computation. Before the errors exceeds an acceptable range, the classical computer 11 performs control to transfer the computation processing to the second quantum computation unit 30.

For the error amount, an estimated value of integrated error amount can be used. This error amount can be calculated, for example, on the basis of a processing time (elapsed time from initialization). Furthermore, the error amount can also be calculated, for example, on the basis of the number of single-qubit gate computations. Furthermore, the error amount can also be calculated, for example, on the basis of the number of two-qubit gate computations. When the error amount is represented by $C_{op}$, $C_{op}$ can be expressed by the following equation.

$$C_{op} = f(t, N_s, N_d) = a \times t + r_s \times N_s + r_d \times N_d$$

Here, t is the processing time. $N_s$ is the number of single-qubit gate computations. $N_d$ is the number of two-qubit computations. a, $r_s$, and $r_d$ represent coefficients. Note that the error includes degradation of the quantum state.

The classical computer 11 includes a register or the like that holds the calculated error amount, and updates the error amount on the basis of information or the like from the first quantum computation unit 20. When the error amount $C_{op}$ exceeds a predetermined threshold $C_{th}$, the classical computer 11 interrupts the computation of the first quantum computation unit 20 for backup of the result of the computation, and transfers the processing to the second quantum computation unit 30. For the threshold $C_{th}$, $C_{th}$ that is adjusted by an index leveling each of the accuracy of a solution, a time required to derive the solution, the power consumption of the information processing apparatus 1, and the use times of the first quantum computation unit 20 and the second quantum computation unit 30 can be used. The threshold $C_{th}$ that is obtained by combining these indices can also be used. To improve the accuracy of the solution, $C_{th}$ is set to a relatively small value. Furthermore, to reduce the power consumption of the information processing apparatus 1, $C_{th}$ is set to a relatively large value.

[Information processing method]

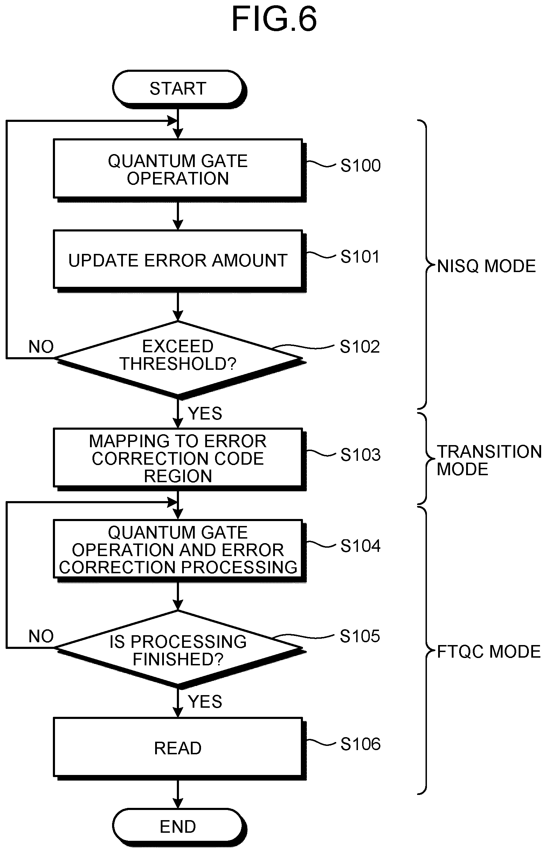

FIG. 6 is a flowchart illustrating an exemplary process procedure of information processing according to the first embodiment of the present disclosure. The drawing is a flowchart illustrating an exemplary process procedure of the information processing apparatus 1.

First, a quantum gate operation that is computation processing is performed in the first quantum computation unit 20 (Step S100). Next, the control unit 10 updates the error amount (Step S101). Next, the control unit 10 determines whether the error amount exceeds the threshold (Step S102). As a result, when the error amount does not exceed the threshold (Step S102, No), the process returns to Step S100, and the control unit 10 causes the first quantum computation unit 20 to continue the quantum gate operation (Step S100).

On the other hand, when the error amount exceeds the threshold in Step S102 (Step S102, Yes), the control unit 10 performs control for transfer to the processing in the second quantum computation unit 30. Specifically, the control unit 10 maps the result of the processing in the first quantum computation unit 20 to an error correction code region (Step S103).

Next, the second quantum computation unit 30 performs a quantum gate operation, which is computation processing, and error correction processing (Step S104). Next, the control unit 10 determines whether the processing of the second quantum computation unit 30 has been finished (Step S105). When the processing has not been finished (Step S105, No), the process returns to Step S104, and the control unit 10 causes the second quantum computation unit 30 to continue the quantum gate operation and the error correction processing (Step S104).

On the other hand, when the processing has finished in Step S105 (Step S105, Yes), the control unit 10 reads a result of the computation (Step S106) and finishes the process. The above processing enables information processing in the information processing apparatus 1.

In the processing of the drawing, the processing in Steps S100 to S102 is referred to as NISQ mode. Furthermore, the processing in Step S103 is referred to as transition mode. Furthermore, the processing of Steps S104 to S106 is referred to as FTQC mode.

Note that, in the calculation of the error amount described above, a time period obtained by subtracting a time period required for the processing in Step S103 of FIG. 6 can be applied, for the processing time t. This is because errors and degradation of the quantum state also occur during the mapping in Step S103.

[Transfer of processing]

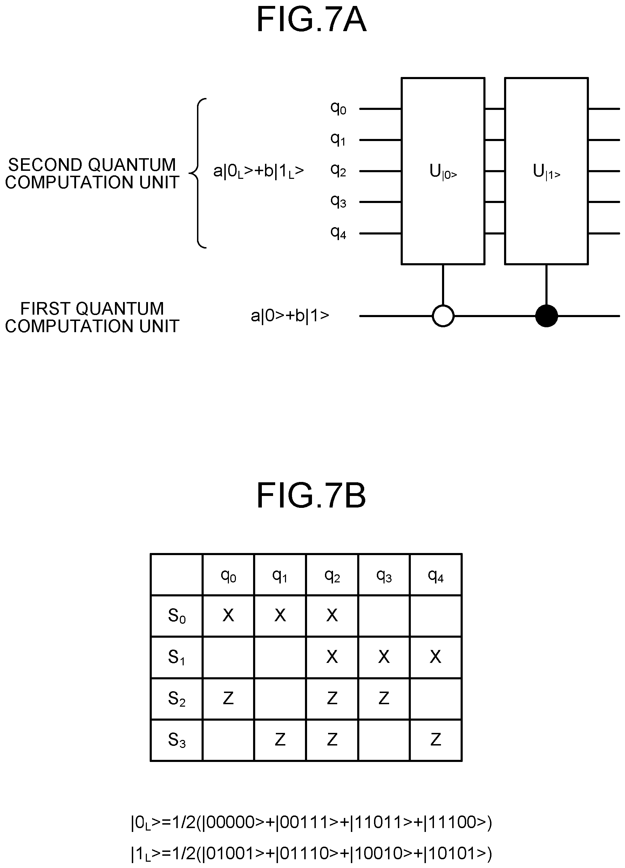

FIG. 7A is a diagram illustrating an example of a circuit for transfer of a result of the computation according to the first embodiment of the present disclosure. The drawing illustrates an example of a circuit for transfer of a result of the processing from the first quantum computation unit 20 to the second quantum computation unit 30. In the drawing, an upper circuit represents the portion of the second quantum computation unit 30, and a lower circuit represents the portion of the first quantum computation unit 20. One-qubit data of the first quantum computation unit 20 is converted into five-qubit data with error code of $q_0$ to $q_4$ of the second quantum computation unit 30. The transfer can be performed by transferring an amplitude of each basis to the second quantum computation unit 30 by using a control-unitary gate or a Toffoli gate according to a correspondence relationship between logical qubit information and physical qubit information used for the error correction code.

The result of the processing in the first quantum computation unit 20 can be mapped to the error correction code region by the circuit in the drawing. Note that, instead of the circuit in the drawing, a plurality of qubits in an entangled state can be shared in advance so that the quantum state is transferred from the first quantum computation unit 20 to the second quantum computation unit 30 by quantum communication (quantum teleportation).

FIG. 7B is a diagram illustrating an example of error correction codes represented by stabilizer codes. The five-qubit data with error code of $q_0$ to $q_4$ can be represented by five-qubit stabilizers in the table of the drawing. Correspondence relationships constituted by the five-qubit stabilizers in the table of the drawing can be represented by the mathematical formulas in the drawing.

As described above, the information processing apparatus 1 according to the first embodiment of the present disclosure performs computation processing without error correction in the first quantum computation unit 20. Furthermore, the information processing apparatus 1 monitors the error amount of the computation processing, and transfers to the processing in the second quantum computation unit 30 before the error amount exceeds the acceptable range to perform the computation processing with error correction. This configuration enables computation processing performed by combining the first quantum computation unit 20 and the second quantum computation unit 30.

(3. Second Embodiment)

In the information processing apparatus 1 of the first embodiment described above, the computation processing of the first quantum computation unit 20 has been transferred to the computation processing of the second quantum computation unit 30. Meanwhile, the information processing apparatus 1 according to a second embodiment of the present disclosure is different from the first embodiment described above in that the computation processing of the second quantum computation unit 30 is transferred to the computation processing of the first quantum computation unit 20.

As described above, in the information processing apparatus 1 according to the second embodiment of the present disclosure, the computation processing of the second quantum computation unit 30 is transferred to the computation processing of the first quantum computation unit 20. Therefore, the control unit 10 of the information processing apparatus 1 allocates the computation processing to the second quantum computation unit 30 and the first quantum computation unit 20. Then, upon compilation of the computation processing, the control unit 10 performs compilation by embedding a command to output a flag indicating the finish of the computation processing in the second quantum computation unit 30. Note that the configuration of the information processing apparatus 1 is similar to that of the information processing apparatus 1 of FIG. 5, and thus the description thereof is omitted.

[Information processing method]

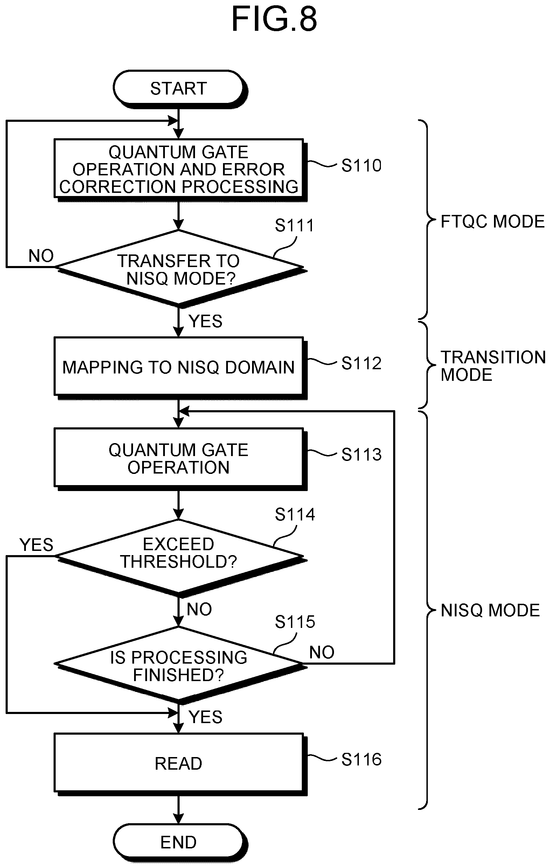

FIG. 8 is a flowchart illustrating an exemplary process procedure of information processing according to the second embodiment of the present disclosure. Similarly to FIG. 6, the drawing is a flowchart illustrating an exemplary process procedure of the information processing apparatus 1. This process procedure is different from the process procedure of FIG. 6 in that the processing is performed in order of the FTQC mode and the NISQ mode.

First, in the second quantum computation unit 30, a quantum gate operation, which is computation processing, and error correction processing are performed (Step S110). Next, the control unit 10 determines whether to transfer to the NISQ mode (Step Sill). Detecting the flag from the second quantum computation unit 30 enables the determination. When non-transfer to the NISQ mode is determined (Step Sill, No), the process returns to Step S110, and the control unit 10 causes the second quantum computation unit 30 to continue the quantum gate operation and the error correction processing (Step S110).

On the other hand, when transfer to the NISQ mode is determined in Step Sill (Step Sill, Yes), control is performed for transfer to the processing in the first quantum computation unit 20. Specifically, the control unit 10 maps the result of the processing in the second quantum computation unit 30 to a NISQ domain (Step S112).

Next, the first quantum computation unit 20 performs a quantum gate operation, which is computation processing (Step S113). Next, the control unit 10 determines whether an error amount exceeds a threshold (Step S114). As a result, when the error amount does not exceed the threshold (Step S114, No), the process proceeds to Step S115. In Step S115, the control unit 10 determines whether the processing in the first quantum computation unit 20 has been finished (Step S115). When the processing has not been finished (Step S115, No), the process returns to Step S113, and the control unit 10 causes the first quantum computation unit 20 to continue the quantum gate operation (Step S113).

On the other hand, when the processing has finished in Step S115 (Step S115, Yes), the control unit 10 proceeds to processing in Step S116.

On the other hand, when the error amount exceeds the threshold in Step S114 (Step S114, Yes), the control unit 10 proceeds to processing in Step S116.

In Step S116, the control unit 10 reads a result of the computation (Step S116), and finishes the process. The above processing enables information processing in the information processing apparatus 1. Note that the processing of Step S114 in the drawing can also be omitted.

In the processing of the drawing, the processing in Steps S110 to S112 corresponds to the FTQC mode. Furthermore, the processing in Step S112 corresponds to the transition mode. Furthermore, the processing in Steps S113 to S116 corresponds to the NISQ mode.

[Transfer of processing]

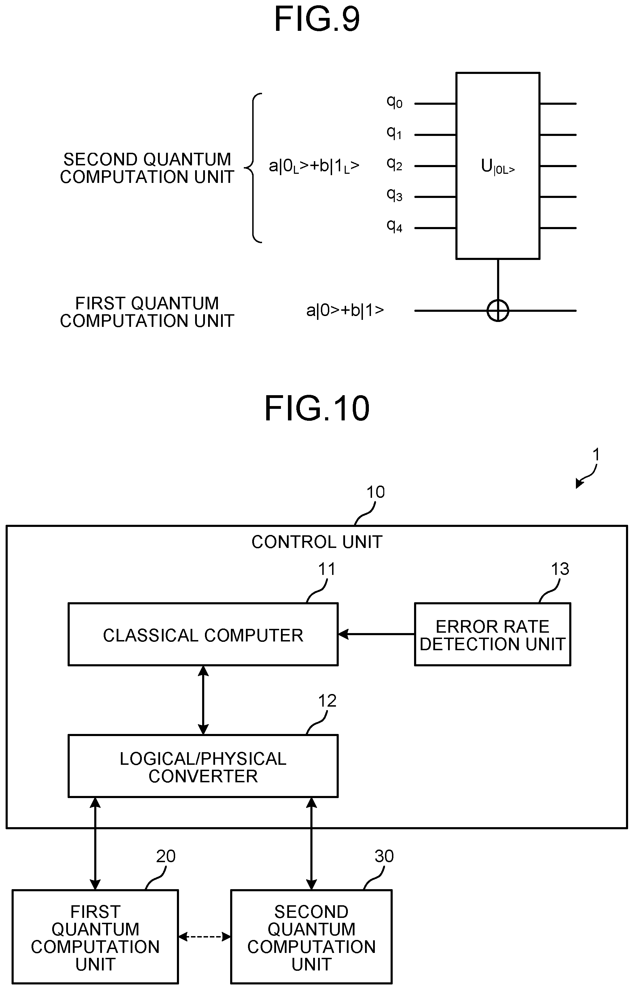

FIG. 9 is a diagram illustrating an example of a circuit for transfer of a result of the computation according to the second embodiment of the present disclosure. The drawing illustrates an example of a circuit for transfer of a result of the processing from the second quantum computation unit 30 to the first quantum computation unit 20. Similarly to FIG. 7A, in the drawing, an upper circuit represents the portion of the second quantum computation unit 30, and a lower circuit represents the portion of the first quantum computation unit 20. In the second quantum computation unit 30, a logical state is represented by a linear combination that indicates a state of multiple qubits. For the transfer of the result of the computation, a multi Toffoli gate operation performed after appropriate basis transformation enables conversion into data of the first quantum computation unit 20.

The result of the processing in the second quantum computation unit 30 including error correction codes can be mapped to the region of the first quantum computation unit 20 by the circuit in the drawing.

Note that the information processing apparatus 1 can also selectively perform processing of selecting the FTQC mode first before transfer to the NISQ mode (process procedure in FIG. 8) and processing of selecting the NISQ mode first before transfer to the FTQC mode (process procedure in FIG. 6). Furthermore, the information processing apparatus 1 can also alternately perform the NISQ mode and the FTQC mode a plurality of times.

The other configurations of the information processing apparatus 1 are similar to the configurations of the information processing apparatus 1 of the first embodiment of the present disclosure, and the description thereof will be omitted.

As described above, the information processing apparatus 1 according to the second embodiment of the present disclosure transfers the computation processing from the second quantum computation unit 30 to the first quantum computation unit 20.

(4. Third Embodiment)

In the information processing apparatus 1 of the first embodiment described above, the error correction processing has been performed in the second quantum computation unit 30. Meanwhile, the information processing apparatus 1 according to a third embodiment of the present disclosure is different from the first embodiment described above in that a code distance for error correction is adjusted.

[Configuration of information processing apparatus]

FIG. 10 is a diagram illustrating an example of a schematic configuration of the information processing apparatus according to a third embodiment of the present disclosure. Similarly to FIG. 5, the drawing is a block diagram illustrating an exemplary configuration of the information processing apparatus 1. The information processing apparatus 1 of FIG. 10 is different from the information processing apparatus 1 of FIG. 5 in that the control unit 10 in the drawing further includes an error rate detection unit 13 and performs control to alternately perform the NISQ mode and the FTQC mode a plurality of times.

The error rate detection unit 13 detects and holds an error rate in the computation processing of the second quantum computation unit 30. The classical computer 11 in the drawing further performs control to adjust the code distance on the basis of the error rate held in the error rate detection unit 13.

In the information processing apparatus 1 in the drawing, the NISQ mode and the FTQC mode are mutually transitioned a plurality of times, and therefore, error correction coding is performed a plurality of times. The code distance can be adjusted in the plurality of times of error correction coding. For example, when the frequency of error correction is less than expected frequency and a system has a small error rate, the codes between which the code distance is smaller can be selected. This configuration makes it possible to reduce the number of qubits and computation required for error correction coding can be reduced. In addition, when the frequency of error correction is higher than the expected frequency, the code distance can be increased to improve an error correction capability.

[Information processing method]

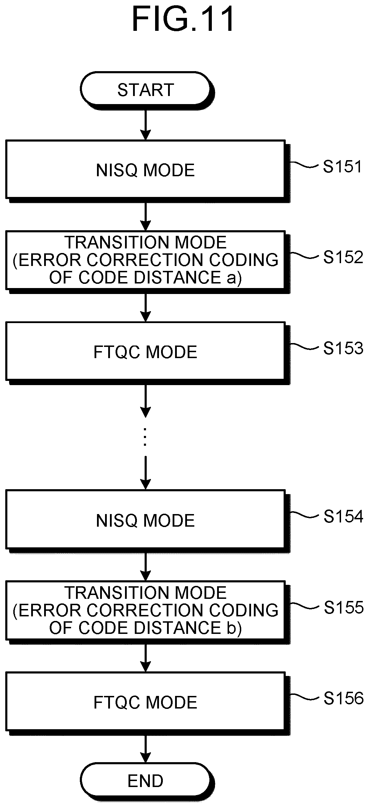

FIG. 11 is a flowchart illustrating an exemplary process procedure of information processing according to the third embodiment of the present disclosure. Similarly to FIG. 6, the drawing is a flowchart illustrating an exemplary process procedure of the information processing apparatus 1.

First, the control unit 10 performs the NISQ mode (Step S151). Next, the control unit 10 performs the transition mode (Step S152). In this transition mode, the control unit 10 performs error correction coding of code distance a. Next, the control unit 10 performs the FTQC mode (Step S153).

The control unit 10 alternately performs the NISQ mode and the FTQC mode. At that time, the control unit 10 adjusts the code distance on the basis of a result of detection by the error rate detection unit 13 and generates a code distance b.

Next, the control unit 10 performs the NISQ mode (Step S154) and performs the transition mode (Step S155). In this transition mode, the control unit 10 performs error correction coding of code distance b. Next, the control unit 10 performs the FTQC mode (Step S156). The above processing enables information processing in the information processing apparatus 1.

The other configurations of the information processing apparatus 1 are similar to the configurations of the information processing apparatus 1 of the first embodiment of the present disclosure, and the description thereof will be omitted.

As described above, the information processing apparatus 1 according to the third embodiment of the present disclosure performs the NISQ mode and the FTQC mode a plurality of times, and adjusts the code distance upon error correction coding. Thus, the process of error correction coding can be optimized.

(5. Modifications)

[Configuration of information processing apparatus]

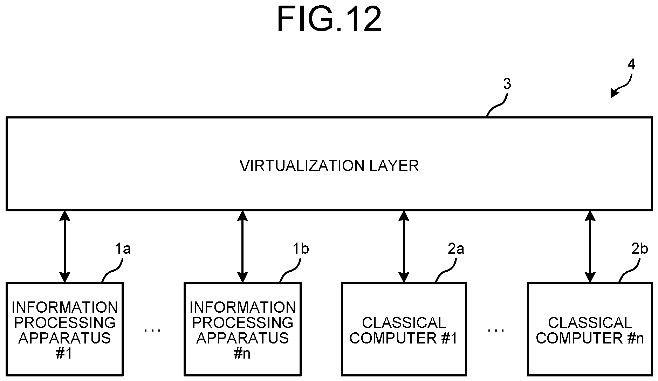

FIG. 12 is a block diagram illustrating an exemplary configuration of an information processing apparatus according to a modification of an embodiment of the present disclosure. The drawing is a block diagram illustrating an exemplary configuration of the information processing apparatus. The information processing apparatus 4 in the drawing includes n information processing apparatuses (information processing apparatuses 1a to 1b), n classical computers (classical computers 2a to 2b), and a virtualization layer 3. The virtualization layer 3 virtualizes a plurality of the information processing apparatuses that perform allocation of the first quantum computation unit 20 and the second quantum computation unit 30.

Note that the effects described herein are merely examples and are not limited to the description, and other effects may be provided.

Note that the present technology can also have the following configurations.

(1) An information processing apparatus comprising:

a first quantum computation unit that includes a qubit and performs quantum computation;
a second quantum computation unit that includes qubits and performs quantum computation with error correction; and
a control unit that causes the first quantum computation unit to perform computation processing and performs control to transfer the computation processing to the second quantum computation unit, based on an error amount in the computation processing in the first quantum computation unit.

(2) The information processing apparatus according to the above (1), wherein the control unit performs control to transfer the computation processing to the second quantum computation unit, based on the error amount according to a processing time of the computation processing.

(3) The information processing apparatus according to the above (1), wherein the control unit performs control to transfer the computation processing to the second quantum computation unit, based on the error amount according to the number of single-qubit gate computations in the computation processing.

(4) The information processing apparatus according to the above (1), wherein the control unit performs control to transfer the computation processing to the second quantum computation unit, based on the error amount according to the number of two-qubit gate computations in the computation processing.

(5) The information processing apparatus according to any one of the above (1) to (4), wherein the control unit further performs control to transfer the computation processing to the first quantum computation unit after causing the second quantum computation unit having been selected to perform the computation processing.

(6) The information processing apparatus according to any one of the above (1) to (5), wherein the control unit further performs control to transfer the computation processing having been transferred to the second quantum computation unit to the first quantum computation unit again.

(7) The information processing apparatus according to any one of the above (1) to (6), wherein the control unit adjusts a code distance for the error correction in the second quantum computation unit.

Reference Signs List

1, 1a, 1b, 4 INFORMATION PROCESSING APPARATUS
2a, 2b, 11 CLASSICAL COMPUTER
10 CONTROL UNIT
13 ERROR RATE DETECTION UNIT
20 FIRST QUANTUM COMPUTATION UNIT
30 SECOND QUANTUM COMPUTATION UNIT

**Claims**

1. An information processing apparatus comprising:

a first quantum computation unit that includes a qubit and performs quantum computation;
a second quantum computation unit that includes qubits and performs quantum computation with error correction; and
a control unit that causes the first quantum computation unit to perform computation processing and performs control to transfer the computation processing to the second quantum computation unit, based on an error amount in the computation processing in the first quantum computation unit.

2. The information processing apparatus according to claim 1, wherein the control unit performs control to transfer the computation processing to the second quantum computation unit, based on the error amount according to a processing time of the computation processing.

3. The information processing apparatus according to claim 1, wherein the control unit performs control to transfer the computation processing to the second quantum computation unit, based on the error amount according to the number of single-qubit gate computations in the computation processing.

4. The information processing apparatus according to claim 1, wherein the control unit performs control to transfer the computation processing to the second quantum computation unit, based on the error amount according to the number of two-qubit gate computations in the computation processing.

5. The information processing apparatus according to claim 1, wherein the control unit further performs control to transfer the computation processing to the first quantum computation unit after causing the second quantum computation unit having been selected to perform the computation processing.

6. The information processing apparatus according to claim 1, wherein the control unit further performs control to transfer the computation processing having been transferred to the second quantum computation unit to the first quantum computation unit again.

7. The information processing apparatus according to claim 1, wherein the control unit adjusts a code distance for the error correction in the second quantum computation unit.

# FIG.1

| ITEMS | FTQC (WITH ERROR CORRECTION) | NISQ (WITHOUT ERROR CORRECTION) |
|---|---|---|
| ADVAN-TAGE | ·NUMBER OF COMPUTATIONS HAS NO UPPER LIMIT | ·HIGH-SPEED COMPUTATION ·LOW COST OF CUBIT CONSTRUCTION |
| DIS-ADVAN-TAGE | ·LOW-SPEED COMPUTATION ·REQUIRE MULTIPLE PHYSICAL QUBITS ·HIGH COST OF NON-CLIFFORD OPERATION | ·NUMBER OF COMPUTATIONS HAS UPPER LIMIT ·LARGE NOISE ·QUANTUMNESS DISAPPEARS IN FINITE TIME |
| TWO-QUBIT COMPU-TATION | Lattice surgery BRAIDING | Cross resonance |

# FIG.2

# FIG.3

50

51
STORAGE

52
CLASSICAL
CHANNEL

53
EXTERNAL
INTERFACE

54
CLASSICAL
COMPUTER

55
LOGICAL/PHYSICAL
CONVERTER

56
QUANTUM
COMPUTATION UNIT

57
QUANTUM
CHANNEL

# FIG.4

# FIG.5

# FIG.6

START

QUANTUM GATE
OPERATION — S100

↓

UPDATE ERROR AMOUNT — S101

↓

EXCEED
THRESHOLD? — S102

NO

YES

MAPPING TO ERROR
CORRECTION CODE
REGION — S103

↓

QUANTUM GATE
OPERATION AND ERROR
CORRECTION PROCESSING — S104

↓

IS PROCESSING
FINISHED? — S105

NO

YES

READ — S106

↓

END

NISQ MODE

TRANSITION
MODE

FTQC MODE

# FIG.7A

SECOND QUANTUM COMPUTATION UNIT $\{$ $a|0_L>+b|1_L>$ $q_0$ $q_1$ $q_2$ $q_3$ $q_4$ $U_{|0>}$ $U_{|1>}$

FIRST QUANTUM COMPUTATION UNIT $a|0>+b|1>$

# FIG.7B

| | $q_0$ | $q_1$ | $q_2$ | $q_3$ | $q_4$ |
|---|---|---|---|---|---|
| $S_0$ | X | X | X | | |
| $S_1$ | | | X | X | X |
| $S_2$ | Z | | Z | Z | |
| $S_3$ | | Z | Z | | Z |

$|0_L>=1/2(|00000>+|00111>+|11011>+|11100>)$

$|1_L>=1/2(|01001>+|01110>+|10010>+|10101>)$

# FIG.8

START

QUANTUM GATE OPERATION AND ERROR CORRECTION PROCESSING — S110

S111
TRANSFER TO NISQ MODE? — NO / YES

} FTQC MODE

MAPPING TO NISQ DOMAIN — S112

} TRANSITION MODE

QUANTUM GATE OPERATION — S113

S114
EXCEED THRESHOLD? — YES / NO

S115
IS PROCESSING FINISHED? — NO / YES

READ — S116

END

} NISQ MODE

# FIG.9

SECOND QUANTUM COMPUTATION UNIT $\left\{ \begin{array}{l} a|0_L>+b|1_L> \end{array} \right.$

$q_0$
$q_1$
$q_2$    $U_{|0L>}$
$q_3$
$q_4$

FIRST QUANTUM COMPUTATION UNIT    $a|0>+b|1>$

# FIG.10

CONTROL UNIT   10

CLASSICAL COMPUTER   11

ERROR RATE DETECTION UNIT   13

LOGICAL/PHYSICAL CONVERTER   12

FIRST QUANTUM COMPUTATION UNIT   20

SECOND QUANTUM COMPUTATION UNIT   30

1

# FIG.11

START

NISQ MODE — S151

TRANSITION MODE
(ERROR CORRECTION CODING
OF CODE DISTANCE a) — S152

FTQC MODE — S153

⋮

NISQ MODE — S154

TRANSITION MODE
(ERROR CORRECTION CODING
OF CODE DISTANCE b) — S155

FTQC MODE — S156

END

# FIG.12

VIRTUALIZATION LAYER

| INFORMATION PROCESSING APPARATUS #1 | ... | INFORMATION PROCESSING APPARATUS #n | CLASSICAL COMPUTER #1 | ... | CLASSICAL COMPUTER #n |

## INTERNATIONAL SEARCH REPORT

International application No.

**PCT/JP2023/011095**

### A. CLASSIFICATION OF SUBJECT MATTER

**_G06N 10/70_**(2022.01)i
FI:    G06N10/70

According to International Patent Classification (IPC) or to both national classification and IPC

### B. FIELDS SEARCHED

Minimum documentation searched (classification system followed by classification symbols)

G06N3/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | CN 111510157 A (TENCENT TECH SHENZHEN CO LTD) 07 August 2020 (2020-08-07) paragraph [0058] | 1-7 |
| A | JP 2009-260882 A (SUMITOMO ELECTRIC IND LTD) 05 November 2009 (2009-11-05) paragraph [0011] | 1-7 |

☐ Further documents are listed in the continuation of Box C.        ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **01 June 2023** | **13 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/011095**

| Patent document cited in search report | | | Publication date (day/month/year) | Patent family member(s) | | Publication date (day/month/year) |
|---|---|---|---|---|---|---|
| CN | 111510157 | A | 07 August 2020 | US 2021/0391873 A1 paragraph [0063] JP 2022-532466 A paragraph [0036] WO 2021/208462 A1 EP 3934103 A1 KR 10-2021-0134363 A | | |
| JP | 2009-260882 | A | 05 November 2009 | (Family: none) | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021272002 A